# EUROPÄISCHE PATENTSCHRIFT

(11) **EP 2 926 014 B1**
(45) Veröffentlichungstag und Bekanntmachung des Hinweises auf die Patenterteilung: **11.04.2018**
(21) Anmeldenummer: 13789304.6
(22) Anmeldetag: 11.11.2013
(51) Int. Cl.: F15B 15/28, F15B 11/12, F15B 19/00

(54) **VERFAHREN UND VORRICHTUNG ZUR STELLUNGSANZEIGE VON HYDRAULISCH BETÄTIGTEN ARMATUREN**
METHOD AND DEVICE FOR POSITION DISPLAY OF HYDRAULICALLY ACTUATED FITTINGS
PROCÉDÉ ET DISPOSITIF PERMETTANT D'INDIQUER LA POSITION D'ACCESSOIRES DE ROBINETTERIE À COMMANDE HYDRAULIQUE

(30) Priorität: 03.12.2012 DE 102012222074
(43) Veröffentlichungstag der Anmeldung: 07.10.2015
(73) Patentinhaber: Pleiger Maschinenbau Gmbh & Co. KG, 58456 Witten (DE)
(72) Erfinder: STOLZ, Ingo, 45883 Gelsenkirchen (DE); PLAAS, Heinrich, 44536 Lünen (DE)
(74) Vertreter: Klingseisen, Franz
(86) Internationale Anmeldenummer: PCT/EP2013/073475
(87) Internationale Veröffentlichungsnummer: WO 2014/086554

(56) Entgegenhaltungen:
- WO-A1-2009/033553
- DE-A1-102009 023 168
- GB-A- 1 275 844

## Beschreibung

Die Erfindung betrifft ein Verfahren und eine Vorrichtung zur Erfassung der Position von hydraulisch betätigten Armaturen, die über Hydraulikleitungen von einer zentralen Steuerstelle aus verstellt werden.

Die Anzeige der Position bzw. Stellung von solchen hydraulisch betätigten Armaturen, wie Schwenk- und Linearantrieben, wird über das jeweilige Schluckvolumen der Armatur vorgenommen. Z.B. auf einem Tankschiff kann eine Armatur in einem Abstand bis zu 300 m von dem Umschaltventil in der zentralen Steuerstelle angeordnet sein. Bei derartig langen Leitungen entspricht die Kompressibilität der Hydraulikflüssigkeit in den Leitungen bei kleineren Armaturen teilweise dem Schluckvolumen der Armatur Deshalb ist eine exakte Stellungsanzeige der betreffenden Armatur ohne Kompensation der Kompressibilität der Hydraulikflüssigkeit im Rohrleitungssystem nicht möglich.

Aus WO 2009/033553 A1 ist ein Verfahren bekannt, bei dem die Strömung der Hydraulikflüssigkeit durch die Hydraulikleitung mittels eines Durchflusssensors in eine Anzahl von elektrischen Impulsen umgewandelt wird, von denen jeder Impuls einer vorgegebenen Volumeneinheit der Hydraulikflüssigkeit entspricht. Die Kompressibilität der Hydraulikflüssigkeit wird für die Anzeige der Stellung der Armatur dadurch kompensiert, dass das Kompressionsvolumen der Hydraulikflüssigkeit in eine Anzahl von elektrischen Impulsen umgesetzt wird, die in einer Anzeigeeinheit derart verarbeitet wird, dass sie bei der Stellungsanzeige der Armatur berücksichtigt wird.

Auf einem Tankschiff ist in der zentralen Steuerstelle eine größere Anzahl von Umschaltventilen für eine entsprechende Anzahl von Armaturen vorhanden, die alle an gemeinsame Versorgungsleitungen angeschlossen sind. Wenn an einem Umschaltventil zwischen Vorlaufleitung und Rücklaufleitung zum Verstellen der Armatur umgeschaltet wird, treten Druckimpulse in den Versorgungsleitungen auf, die sich auf die benachbarten Umschaltventile und damit auf die Stellungsanzeige der daran angeschlossenen Armaturen nachteilig auswirken können.

Weiterhin soll die Stellungsanzeige über einen längeren Zeitraum hin und auch nach einer größeren Anzahl von Umschaltvorgängen am Umschaltventil immer präzise die Stellung der Armatur anzeigen.

Aufgabe der Erfindung ist es, die bekannte Stellungsanzeige auf der Basis des Zählens von Impulsen so zu verbessern, dass diese Probleme überwunden werden und die Stellungsanzeige genauer wird.

Nach einem Aspekt der Erfindung wird die Rücklaufleitung jeder einzelnen Armatur am Umschaltventil unter einem vorgegebenen Vorspanndruck gehalten, wenn von der druckführenden Vorlaufleitung auf die im Wesentlichen "drucklose" Rücklaufleitung umgeschaltet bzw. die Vorlaufleitung entspannt wird.

Hierdurch werden Druckimpulse, die sich durch Umschaltvorgänge an einem oder mehreren Umschaltventilen ergeben, durch den Vorspanndruck in der mit der Armatur verbundenen Rücklaufleitung kompensiert bzw. so gedämpft, dass sich diese Druckimpulse nicht auf die Impulszähler an anderen Stelleinheiten nachteilig für die Stellungsanzeige der anderen Armaturen auswirken.

Nach der Erfindung wird bei einem Verfahren zum Anzeigen der Stellung einer hydraulisch betätigten Armatur mit einem Kolben in einem Stellzylinder zum Betätigen der Armatur, der über zwei Hydraulikleitungen mit einem Umschaltventil verbunden ist, durch das die Hydraulikleitungen zwischen druckführendem Vorlauf und drucklosem Rücklauf umgeschaltet werden können,
wobei die Strömung der durch eine der Hydraulikleitungen strömenden Hydraulikflüssigkeit in eine Anzahl von elektrischen Impulsen umgewandelt wird, von denen jeder einer vorgegebenen Volumeneinheit der Hydraulikflüssigkeit entspricht, wobei
das Umschaltventil an Versorgungsleitungen angeschlossen ist, an denen weitere Umschaltventile zum Betätigen weiterer Armaturen angeschlossen sind, und
wobei die Umschaltventile über eine Abzweigleitung an die für alle Armaturen gemeinsame Rücklaufleitung angeschlossen sind,
an jedem Umschaltventil in der Abzweigleitung zur Rücklaufleitung ein Vorspanndruck aufrechterhalten, der höher ist als der Druck in der gemeinsamen Rücklaufleitung.
Hierdurch können sich Druckimpulse beim Umschalten an einem der Umschaltventile nicht auf Impulszähler an benachbarten anderen Umschaltventilen nachteilig auswirken.

Zweckmäßigerweise wird durch eine an die beiden Versorgungsleitungen angeschlossene hydraulische Einrichtung der Vorspanndruck in einem Leitungsabschnitt aufrechterhalten, mit dem alle Umschaltventile verbunden werden.

Der Vorspanndruck kann zweckmäßigerweise auf ca. 3 bis 5 bar in dem zu den Umschaltventilen führenden Leitungsabschnitt eingestellt werden.

Bei einer Vorrichtung zum Anzeigen der Stellung von mehreren hydraulisch betätigten Armaturen, die jeweils einen Stellzylinder zum Betätigen der Armatur aufweisen, der durch zwei Hydraulikleitungen mit einem Umschaltventil verbunden ist, durch das die Hydraulikleitungen zwischen druckführendem Vorlauf und drucklosem Rücklauf umgeschaltet werden können, und ein Sensor in einer der beiden Hydraulikleitungen vorgesehen ist, der die Strömung der Hydraulikflüssigkeit durch die Hydraulikleitung in eine Anzahl von elektrischen Impulsen umwandelt, von denen jeder einer vorgegebenen Volumeneinheit der Hydraulikflüssigkeit entspricht, wird erfindungsgemäß eine hydraulische Einrichtung mit den für alle Umschaltventile gemeinsamen Fluidversorgungsleitungen verbunden und in einem gesonderten Leitungsabschnitt ein Vorspanndruck gegenüber dem Druck in der gemeinsamen Rücklaufleitung aufrechterhalten, wobei alle Umschaltventilen an diesem Leitungsabschnitt angeschlossen sind, sodass der Vorspanndruck an allen Umschaltventilen anliegt.

Zweckmäßigerweise weist die hydraulische Einrichtung ein Druckbegrenzungsventil und ein Rückschlagventil zwischen Druckbegrenzungsventil und Versorgungsleitungen auf.

Die Erfindung wird beispielsweise anhand der Zeichnung näher erläutert. Es zeigen
- Fig. 1: den Schaltungsaufbau mit einem elektronischen Steuermodul an einer einzelnen Armatur,
- Fig. 2: schematisch die hydraulische Schaltung mehrerer in einer zentralen Steuerstelle nebeneinanderliegender Umschaltventile,
- Fig. 3: durch schematische Darstellungen des Kolbens im Stellzylinder einer Armatur den Ablauf der Verfahrensschritte bei einem Lernzyklus, und
- Fig. 4: eine Ansicht einer blockförmigen Bauform eines Steuermoduls.

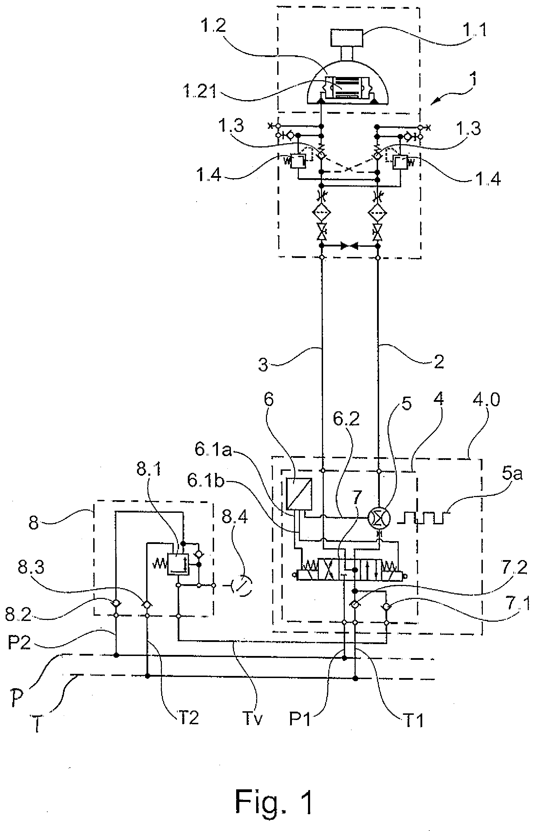

In Fig. 1 ist mit 1 eine Armatureneinheit bezeichnet, die beispielsweise eine in einer nicht dargestellten Rohrleitung angeordnete Schwenkklappe 1.1 umfasst, die beispielsweise mittels einer Zahnstange durch einen Kolben 1.21 in einem Stellzylinder 1.2 verstellt wird, der auf gegenüberliegenden Seiten mit Hydraulik- bzw. Druckmittelleitungen 2 und 3 verbunden ist In der Armatureneinheit 1 sind Rückschlagventile 1.3 zum Halten einer eingestellten Stellung des Kolbens 1.21 im Stellzylinder 1.2 und Druckbegrenzungsventile 1.4 in an sich bekannter Schaltung angeordnet

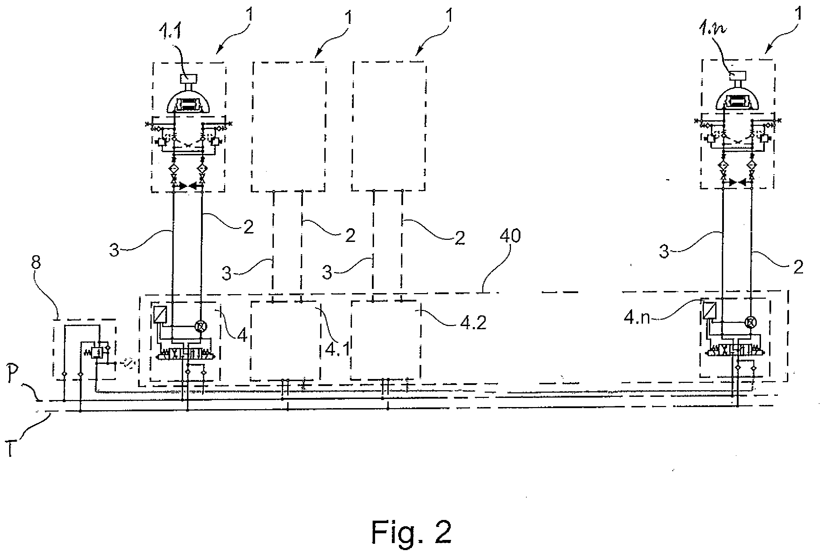

Bei 4 ist in Fig. 1 schematisch eine Steuereinheit wiedergegeben, die in einer zentralen Steuerstelle 40 angeordnet ist, von der aus die Armatureneinheit 1 gesteuert wird, die sich in einer größeren Entfernung von der Steuerstelle 40 befinden kann. Zur Vereinfachung der Darstellung ist in Fig. 1 nur eine Armatureneinheit 1 mit Steuereinheit 4 wiedergegeben. Wie Fig. 2 zeigt, sind in der zentralen Steuerstelle 40 beispielsweise am Steuerpult eines Tankers mehrere Steuereinheiten 4.1 bis 4.n zum Steuern einer größeren Anzahl von Armaturen angeordnet.

In jeder Steuereinheit 4 ist ein an sich bekanntes Stell- bzw. Umschaltventil 7 angeordnet, durch das die eine oder andere Seite des Kolbens 1.21 im Stellzylinder 1.2 mit hydraulischem Druck beaufschlagt wird, während die jeweils andere Hydraulikleitung 2 bzw. 3 als Rücklaufleitung geschaltet wird. Das Umschaltventil 7 ist an Versorgungsleitungen P und T angeschlossen. Mit P ist die mit einer nicht dargestellten Druckquelle, üblicherweise einer Pumpe, verbundene, druckführende Vorlaufleitung bezeichnet und mit T die drucklose Rücklaufleitung, die zu einem nicht dargestellten Tank bzw. Reservoir für das Hydraulikfluid bzw. die Hydraulikflüssigkeit führt. Das Umschaltventil 7 ist über eine Abzweigleitung T1 mit der drucklosen Rücklaufleitung T und über eine Abzweigleitung P1 mit der druckführenden Vorlaufleitung P verbunden.

Vorzugsweise im Bereich der Steuerstelle 40 bzw. nahe dem Umschaltventil 7 ist in einer der beiden Hydraulikleitungen 2 oder 3 ein digitales Volumenmessgerät bzw. ein Durchflusssensor 5 angeordnet, der die Strömung des durch die Leitung fließenden Fluids in eine Folge von elektrischen Impulsen umwandelt. Der Durchflusssensor 5 kann beispielsweise ein von der Fluidströmung angetriebenes Rad aufweisen, das über Hallsensoren berührungsfrei elektrische Impulse erzeugt. Derartige Durchflusssensoren bzw. Durchflusszähler 5 sind an sich bekannt. Die von dem Durchflusszähler 5 abgegebenen Signale können beispielsweise Rechtecksignale sein, wie dies schematisch bei 5a in Fig. 1 wiedergegeben ist, wobei ein Impuls einer vorgegebenen Volumeneinheit des Fluids entspricht. Ein Impuls kann dabei einer Volumeneinheit von z.B. 0,05 cm³ des durch die Leitung strömenden Fluids entsprechen.

Bei 6 ist schematisch ein Steuermodul in der Steuereinheit 4 wiedergegeben, das über erste elektrische Leitungen 6.1a und 6.1b bei a und b mit den gegenüberliegenden Seiten des Umschaltventils 7 verbunden ist, das als 3-Wege-Ventil ausgebildet ist und durch jeweils einen Solenoid bei a und b in die eine oder andere Stellung geschaltet wird. Weiterhin ist das Steuermodul 6 über eine zweite elektrische Leitung 6.2 mit dem digitalen Volumenmessgerät 5 verbunden, durch die unterschiedliche elektrische Impulse entsprechend der Durchflussrichtung des Hydraulikfluids an das Steuermodul 6 bzw. an ein darin vorgesehene Programm weitergeleitet werden, in dem die Signale bzw. Impulszahlen verarbeitet werden.

Das digitale Steuermodul 6 dient zur Steuerung der Armatur mit analoger Stellungsrückmeldung. Der digitale Durchflusszähler 5 weist zwei um 90° phasenversetzte, binäre Zählsignale auf und er wird vorzugsweise in der Hydraulikleitung angeordnet, die zum Öffnen der Armatur 1.1 verwendet wird.

Durch die Verwendung von zwei Impulssignalen, die um 90° versetzt zueinander sind, lässt sich anhand der Impulsfolgen die Strömungsrichtung des Hydraulikfluids erkennen. In dem Programm des Steuermoduls 6 wird mit Hilfe einer Richtungslogik die Strömungsrichtung des Fluids als Auf- oder Zu-Stellbewegung erkannt. Die Unterscheidung zwischen Vor- und Rücklauf in der Hydraulikleitung 2 ergibt sich im Wesentlichen durch die Drehrichtung des Rades im Durchflusssensor 5 bzw. durch die Drehrichtungserkennung am Impulsgeber, ob dieser nach rechts oder nach links d re ht..

Wenn die Hydraulikleitung 2 als druckführende Vorlaufleitung geschaltet ist und das Hydraulikfluid in Richtung zur Armatureneinheit 1 strömt, tritt aufgrund der Kompressibilität des Hydraulikfluids in der Vorlaufleitung eine höhere Impulszahl als bei der Rückströmung über den gleichen Stellweg des Kolbens 1.21 auf, wenn die Hydraulikleitung 2 als Rücklaufleitung drucklos geschaltet ist. Hierdurch kann durch das im Steuermodul 6 vorhandene Programm anhand der unterschiedlichen Impulszahl die Kompressibilität bzw. das Kompressionsvolumen des Hydraulikfluids herausgerechnet werden.

Die Schaltstellung des Umschaltventils 7 in Fig. 1 ist in der Mittelstellung wiedergegeben, in der beide Hydraulikleitungen 2 und 3 mit der zum Reservoir führenden Rücklaufleitung T verbunden sind, also drucklos geschaltet sind. In der in Fig. 1 schematisch wiedergegebenen rechten Position des Umschaltventils 7 ist die Hydraulikleitung 3 an die druckführende Vorlaufleitung P und die Hydraulikleitung 2 an die drucklose Rücklaufleitung T angeschlossen, während in der in Fig. 1 links schematisch wiedergegebenen Position die Hydraulikleitung 2 an die Vorlaufleitung P und die Hydraulikleitung 3 an die Rücklaufleitung T angeschlossen wird. Die Fluidleitungen T und P werden als für alle Steuereinheiten 4 bis 4.n gemeinsame Fluidversorgungsleitungen bezeichnet.

Fig. 2 zeigt schematisch eine hydraulische Schaltung, wobei in der Steuerstelle 40 mehrere Steuereinheiten 4 bis 4.n mit jeweils einem Umschaltventil 7 und einem Steuermodul 6 entsprechend der Darstellung in Fig. 1 an die Fluidversorgungsleitungen P und T angeschlossen sind, um eine entsprechende Anzahl von Armatureneinheiten 1 bis 1.n zu steuern.

An die für alle Umschaltventile 7 gemeinsamen Versorgungsleitungen P und T ist eine hydraulische Einrichtung 8 mit einem Druckbegrenzungsventil 8.1 über Rückschlagventile 8.2 und 8.3 angeschlossen. Auf der Eingangsseite ist das Druckbegrenzungsventil 8.1 über eine Abzweigleitung P2 und das Rückschlagventil 8.2 mit der Vorlaufleitung P verbunden, wobei das Rückschlagventil 8.2 die Vorlaufleitung P zum Druckbegrenzungsventil 8.1 freigibt und in der Gegenrichtung die Abzweigleitung P2 absperrt. Weiterhin ist das Druckbegrenzungsventil 8.1 auf der Eingangsseite über eine Abzweigleitung T2 und das Rückschlagventil 8.3 mit der drucklosen Rücklaufleitung T verbunden, wobei das Rückschlagventil 8.3 durch den Druck vom Druckbegrenzungsventil 8.1 öffnet und in der Gegenrichtung die Abzweigleitung T2 absperrt. Auf der Ausgangsseite ist das Druckbegrenzungsventil 8.1 mit einem Leitungsabschnitt Tv verbunden, in dem ein vorgegebener Druck von z.B. 4 bar aufrechterhalten wird und der mit den Abzweigleitungen T1 der Rücklaufleitung T verbunden ist, die zu den Umschaltventilen 7 führen (Fig. 1).

Das Druckbegrenzungsventil 8.1 hält in dem Leitungsabschnitt Tv einen vorgegebenen Fluiddruck aufrecht, der beispielsweise durch eine angedeutete Druckanzeige 8.4 überwacht werden kann. Der Leitungsabschnitt Tv ist jeweils über ein Rückschlagventil 7.1 mit der Abzweigleitung T1 zwischen Umschaltventil 7 und druckloser Rücklaufleitung T verbunden, das auf einen Öffnungsdruck von z.B. 0,2 bar eingestellt ist. In der Abzweigleitung T1 ist zwischen zentraler Rücklaufleitung T und der Anschlussstelle des Leitungsabschnitts Tv ein Rückschlagventil 7.2 angeordnet, das beispielsweise auf einen Öffnungsdruck von 5,0 bar eingestellt sein kann und beim Entspannen der jeweiligen Vorlaufleitung 2 oder 3 die Verbindung von dem Umschaltventil 7 zur Rücklaufleitung T freigibt, bis der Vorspanndruck erreicht ist.

Durch die Einrichtung 8 wird am Umschaltventil 7, wenn sich dieses in der dargestellten Mittelstellung befindet, in der die beiden Hydraulikleitungen 2 und 3 "drucklos" bzw. "entspannt" geschaltet sind, ein Druck von beispielsweise 4 bar in den beiden Hydraulikleitungen 2 und 3 als Vorspanndruck aufrechterhalten, der von dem Druckbegrenzungsventil 8.1 in dem Leitungsabschnitt Tv eingestellt wird. Mit anderen Worten liegt am Umschaltventil 7 immer ein Vorspanndruck von z.B. 4 bar an, wenn eine der beiden Hydraulikleitungen 2 und 3 oder beide Hydraulikleitungen mit der zentralen Rücklaufleitung T verbunden wird bzw. werden.

Der Leitungsabschnitt Tv ist in Fig. 2 mit allen Umschaltventilen 7 in den Steuereinheiten 4 bis 4.n verbunden, wobei jede Anschlussstelle in der gleichen Weise ausgebildet ist wie anhand von Fig. 1 erläutert.

Durch die Aufrechterhaltung eines Vorspanndrucks von beispielsweise 4 bar am Umschaltventil 7 bei Drucklos-Schalten einer oder beider Hydraulikleitungen 2, 3 werden Druckimpulse, die bei einer Umschaltung des Umschaltventils 7 auftreten, von der gemeinsamen Rücklaufleitung T getrennt bzw. so gedämpft, dass sie sich nicht an einem benachbarten Umschaltventil 7 und damit am benachbarten Impulszähler 5 auswirken können und damit nicht die Stellungsanzeige an dem zugeordneten Steuermodul 6 beeinflussen können. Hierdurch wird die Genauigkeit der auf dem Zählen von Druckimpulsen beruhenden Stellungsanzeige bei mehreren, parallel geschalteten Steuereinheiten 4 bis 4.n erhöht.

Weiterhin wird zur Erhöhung der Genauigkeit der Stellungsanzeige vorzugsweise vor jeder Inbetriebnahme der Stellungsanzeige ein Lernzyklus ausgeführt, durch den die Grundkomponenten für die Stellungsanzeige vor einem Stellvorgang erfasst werden, damit die darauf folgende Verstellung der Armatur insbesondere beim Anfahren einer Zwischenstellung genau angezeigt werden kann. Das in dem Steuermodul 6 vorgesehene Programm löst vorzugsweise bei jeder Inbetriebnahme der Stellungsanzeige bzw. beim Einschalten des Steuermoduls einen Lernzyklus aus.

Durch einen solchen Lernzyklus werden die für die Stellungsanzeige wesentlichen Parameter, wie z.B. der die Kompressibilität des Druckmittels bzw. der Hydraulikflüssigkeit stark beeinflussende Druck in den Hydraulikleitungen oder auch die Temperatur der Hydraulikflüssigkeit bei der Stellungsanzeige berücksichtigt bzw. die Auswirkung dieser Parameter ausgeschaltet.

Durch einen solchen Lernzyklus wird das Steuermodul 6 auch kalibriert. Hierbei erfasst das Steuermodul 6 das Arbeitsvolumen der angeschlossenen Armatur, verschiedene Kompressionsvolumina und die Laufzeit des Kolbens im Stellzylinder 1.2.

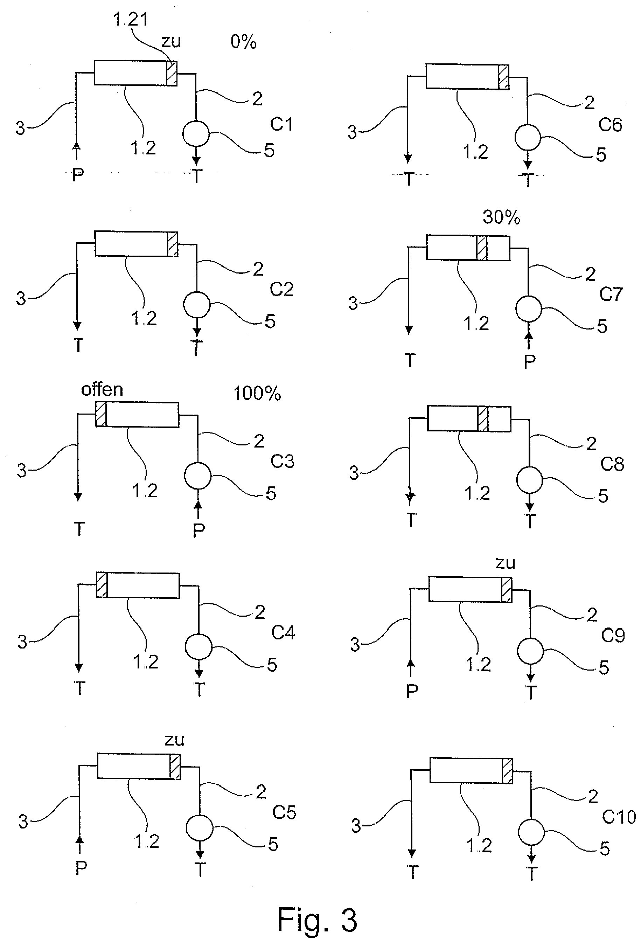

Vorzugsweise werden die folgenden Verfahrensschritte für einen Lernzyklus durch ein in dem Steuermodul 6 vorgesehenes Programm ausgeführt. Fig. 3 zeigt schematisch die im Folgenden beschriebenen Schritte des Lernzyklus.

In einem ersten Schritt C1 des Lernzyklus wird die Armatur bzw. der Kolben 1.21 im Stellzylinder 1.2 durch Anlegen von Druck in der Hydraulikleitung 3 in die Zu-Stellung gefahren, in der die in der Armatur 1.1 vorgesehene Klappe in der Schließstellung die nicht dargestellte Rohrleitung abschließt und am Armaturenkörper als Anschlag anliegt, sodass kein Durchfluss mehr in der Hydraulikleitung 2 auftreten kann. Diese Anschlagposition der Armatur 1.1 wird als Zählerstillstand registriert, der im Programm einem Referenzwert von 0 % gleichgesetzt wird.
Hierbei wird, wie Fig. 3 zeigt, die Hydraulikleitung 3 mit Druck beaufschlagt und die Hydraulikleitung 2, in der sich der Durchflusssensor 5 als Impulszähler befindet, mit der Rücklaufleitung T bzw. dem Leitungsabschnitt Tv verbunden, sodass der Kolben 1.21 im Stellzylinder in die z.B. rechts wiedergegebene Endstellung bewegt wird, die der Anschlagstellung der Klappe entspricht.
Eine Zählung der Impulse am Durchflusszähler 5 erfolgt dabei noch nicht.

Nachdem im ersten Schritt C1 die Hydraulikleitung 3 mit der Vorlaufleitung P und die Hydraulikleitung 2 mit der Rücklaufleitung T bzw. der Abzweigleitung T1 verbunden wurde, werden in einem zweiten Schritt C2 die beiden Hydraulikleitungen 2 und 3 "drucklos" dadurch geschaltet, dass das Umschaltventil 7 in die Mittelstellung verstellt wird, in der die beiden Hydraulikleitungen 2 und 3 mit der Abzweigleitung T1 der Rücklaufleitung T verbunden sind. Auch dieser Schaltzustand wird dadurch registriert, dass der digitale Durchflusszähler 5 keinen Impuls mehr abgibt. Dies bedeutet in der Mittelstellung des Umschaltventils 7, dass in beiden Hydraulikleitungen 2 und 3 der gleiche Druckzustand bzw. Vorspanndruck herrscht, der durch die Einrichtung 8 in Höhe von beispielsweise 4 bar eingestellt ist. Die in der Armatur 1.1 vorgesehene Klappe wird hierbei nicht betätigt. Sie wird durch die Rückschlagventile 1.3 in ihrer Stellung gehalten.

In einem dritten Schritt C3 wird die Armatur 1.1 in die volle Offen-Stellung gefahren, indem die Druckmittelleitung 2 mit Druck beaufschlagt und die Druckmittelleitung 3 mit der Rücklaufleitung T verbunden wird, wobei das Erreichen der in Fig. 3 wiedergegebenen Offen-Stellung, in der der Kolben 1.21 am linken Ende des Stellzylinders 1.2 anliegt, dadurch registriert wird, dass am Durchflusszähler 5 kein Durchfluss mehr registriert bzw. kein Impuls mehr abgegeben wird.
In diesem dritten Schritt C3 werden die am Durchflusszähler 5 auftretenden Impulse, die zwischen der Zu-Stellung in C2 und der Offen-Stellung in C3 auftreten, erstmals gezählt, Für die vollständige Offen-Stellung entsprechend C3 kann in der Armatur 1.1 beispielsweise ein Anschlag vorgesehen sein.

In diesem dritten Schritt C3 werden die Impulse gezählt, die vom Durchflusszähler 5 von der Zu-Stellung (0 %) bis zum vollständigen Erreichen der Offen-Stellung abgegeben werden, wobei die Impulszahl in der Offenstellung einem Referenzwert von 100 % gleichgesetzt wird Die Zahl der festgestellten Impulse entspricht dem Schluckvolumen der Armatur 1.1 bzw. dem Hubvolumen des Kolbens 1.21 im Stellzylinder 1.2 einschließlich dem Kompressionsvolumen der Hydraulikflüssigkeit, die bei Erreichen der Offen-Stellung im Stellzylinder 1.2 und in der zu dieser führenden Hydraulikleitung 2 komprimiert wird. Hierbei wird mit einem maximalen Druck von beispielsweise 110 bar die maximale Kompression der Hydraulikflüssigkeit erreicht, weil die Klappe in der Armatur 1.1 an einem Anschlag durch den Kolben 1.21 im Stellzylinder 1.2 angedrückt wird.

In einem vierten Schritt C4 wird am Umschaltventil 7 wieder die Mittelstellung angefahren, in der die zuvor druckführende Hydraulikleitung 2 entspannt wird. Hierbei werden die während des Entspannens der Hydraulikflüssigkeit in der Hydraulikleitung 2 auftretenden Impulse gezählt, deren Anzahl dem Kompressionsvolumen entspricht, das im Stellzylinder 1 2 und in der Hydraulikleitung 2 auftritt. Es wird vorzugsweise eine vorgegebene Wartezeit von beispielsweise 2 Sec. eingestellt, damit der Stillstand des Durchflusszählers 5 jeweils zuverlässig ermittelt wird.

In einem fünften Schritt C5 wird die Armatur 1.1 wieder in die Zu-Stellung durch Druckbeaufschlagung der Hydraulikleitung 3 bewegt, bis der Zählerstillstand und damit der Referenzwert von 0 % erreicht ist. Hierbei wird der Durchflusszähler 5 in der Gegenrichtung zum Schritt C3 durchströmt, wie Fig. 3 zeigt, wobei die Anzahl der dabei auftretenden Impulse vom Durchflusszähler 5 gezählt wird, die dem Schluckvolumen der Armatur bzw. des Stellzylinders 1.2 entspricht.

Damit kann durch Differenzbildung der Impulszahlen aus C3 - C5 = C4 das Kompressionsvolumen überprüft werden, das im Schritt C4 ermittelt wurde.

In einem sechsten Schritt C6 wird wie im zweiten Schritt C2 die Mittelstellung am Umschaltventil 7 eingestellt und so lange gewartet, bis am Durchflusszähler 5 kein Impuls mehr auftritt, also kein Durchfluss mehr vorhanden ist.

In einem siebten Schritt C7 wird die Armatur 1.1 auf eine Zwischen- bzw Öffnungsstellung von z.B. 30 % der Klappenstellung eingestellt, wobei zum Anfahren dieser Zwischenstellung ein geringerer Druck aus der Vorlaufleitung P am Kolben 1.21 im Stellzylinder 1.2 anliegt, weil der Kolben 1.21 bei relativ geringem Widerstand nur verschoben wird, aber nicht gegen einen Anschlag gedrückt wird. Die am Durchflusszähler 5 bei diesem geringeren Druck auftretenden Impulse werden gezählt. Wegen des geringeren Drucks tritt eine geringere Kompression der Hydraulikflüssigkeit in der Hydraulikleitung 2 auf, sodass die Impulszahl für diese 30 %-Offen- bzw. Zwischenstellung das Schluckvolumen der Armatur bzw. des Stellzylinders 1.2 in dieser Zwischenstellung und das Kompressionsvolumen bei diesem geringeren Druck wiedergibt.

In einem achten Schritt C8 wird wiederum die Mittelstellung am Stellventil 7 wie im vierten Schritt C4 angefahren, wobei die Rückschlagventile 1.3 an der Armatur 1.1 die Schwenkstellung der Klappe in der 30 %-Stellung halten. Die während des Entspannens der zuvor mit Druck beaufschlagten Hydraulikleitung 2 auftretenden Impulse werden gezählt, die das Kompressionsvolumen bei dem geringeren Verstelldruck in Schritt C7 ergeben, das beim Anfahren der 30 % Offen-Stellung in dem Zählwert enthalten war.

In einem neunten Schritt C9 wird die Armatur 1.1 wieder in die Zu-Stellung gefahren wie im fünften Schritt C5, während die Impulszahl in der Rücklaufleitung 2 ermittelt wird, die dem Schluckvolumen der Armatur 1.1 in der 30 %-Offenstellung entspricht.

Bevor die Armatur in die gewünschte Stellung gefahren wird, wird in einem zehnten Schritt C10 wieder die Mittelstellung des Umschaltventils 7 angefahren. Aus der Mitteistellung wird dann durch Druckbeaufschlagung der Hydraulikleitung 2 oder 3 der Kolben 1.21 im Stellzylinder 1.2 in die gewünschte Betriebsstellung gebracht, in die die Armatur 1.1 endgültig gebracht werden soll.

Der Schritt C10 stellt nach Ausführen des Lernzyklus eine Ausgangsstellung für die eigentliche Positionierung der Armatur dar. Wenn die Armatur z.B. auf 50 % Offen-Stellung eingestellt werden soll, so wird nach Durchlaufen des Lernzyklus im Anschluss an den Schritt C10 am Steuermodul 6 50 % Offen-Stellung eingegeben, worauf man aus dem aus dem Schritt C5 bekannten gesamten Schluckvolumen der Armatur 50 % in Form der Anzahl von Impulsen für 50 % rechnet plus das aus dem Schritt C8 bekannte Kompressionsvolumen für eine Zwischenstellung, wobei aus der aus dem Schritt C8 bekannten Anzahl von Impulsen errechnet werden kann, wie groß das Kompressionsvolumen für z.B. 10 % des Stellweges ist, sodass für die einzustellende 50 % Offen-Stellung das Kompressionsvolumen von 5 x 10 % aus dem Schritt C8 gerechnet werden kann.

In den Schritten C7 bis C9 wird das Kompressionsvolumen bei geringerem Druck ermittelt, der in der Vorlaufleitung bei Anfahren einer Zwischenstellung der Armatur auftritt, nachdem beim Anfahren in eine Zwischenstellung kein Widerstand wie beispielsweise ein Anschlag für den Kolben 1.21 vorhanden ist. In den Schritten C3 und C4 wird das Kompressionsvolumen bei maximalem Druck ermittelt.

Durch diesen Lernzyklus, durch den zum einen das Kompressionsvolumen bei maximalem Druck (Schritte C3 und C4) und zum anderen das Kompressionsvolumen bei geringerem Druck (Schritte C7 und C8) ermittelt wird, der beim Anfahren einer Zwischenstellung auftritt, wird immer eine genaue Wiedergabe der Position der Armatur bzw. des Kolbens 1.21 im Stellzylinder 1.2 angezeigt. Dadurch, dass jeweils bei Inbetriebnahme der Stellungsanzeige der Lernzyklus ausgeführt wird bevor die Armatur 1.1 auf eine bestimmte Position eingestellt wird, wird immer unabhängig davon, wie oft und wie lange die Armatur in Betrieb genommen wird, die Stellung genau angezeigt.

Bei dem Lernzyklus werden vorzugsweise vor jeder Druckbeaufschlagung des Kolbens 1.21 im Stellzylinder 1.2 die beiden Hydraulikleitungen 2, 3 durch die Mittelstellung des Umschaltventils 7 drucklos geschaltet bzw. entspannt, wobei die beim Entspannen auftretenden Impulse gezählt werden können. Durch Entspannen der Hydraulikleitungen 2, 3 vor jeder Druckbeaufschlagung im Stellzylinder 1.2 wird eine neutrale Ausgangssituation geschaffen, die die Impulszahl bei einem nachfolgenden Schritt nicht verfälscht.

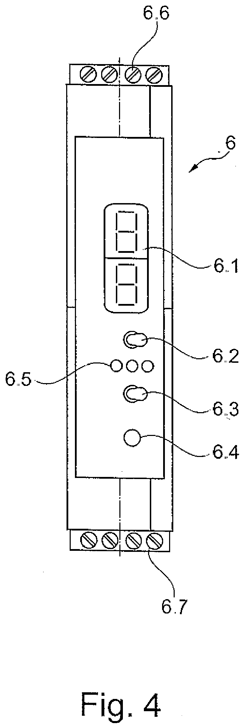

Das z.B. block- oder plattenförmig gestaltete Steuermodul 6 kann z.B. Abmessungen von etwa 3 x 10 x 10 cm haben. Fig 4 zeigt eine Ansicht der Vorderseite einer beispielsweisen Ausführungsform eines Steuermoduls 6, das den zuvor geschilderten Lernzyklus ausführt und an dem die erforderlichen Einstellungen vorgenommen werden können.

Fig. 4 zeigt ein Display 6.1, beispielsweise in der Form von zwei übereinander angeordneten 7-Segmentanzeigen, die die momentane Stellung der Armatur 1.1 bzw. des Kolbens 1.21 im Stellzylinder 1.2 und weitere Statusinformationen anzeigen. Mit 6.2 und 6.3 sind Schalter bezeichnet. Mit 6.4 ist ein Set-Taster bezeichnet, durch den eine Kalibrierfunktion gestartet werden kann. Dieser Set-Taster 6.4 wird vorzugsweise durch einen Klarsichtdeckel vor unbeabsichtigter Betätigung geschützt. Das Steuermodul 6 wird nach der Installation kalibriert, wobei durch eine Kalibrierfahrt entsprechend den Schritten in Fig. 3 das Steuermodul 6 alle antriebs- und installationsabhängigen Parameter berechnet, die in einem Speicher dauerhaft hinterlegt werden.

Bei 6.5 sind drei LED-Leuchten in z.B. Rot, Gelb und Grün wiedergegeben, die den Betriebszustand des Stellzylinders 1.2 und des Steuermoduls 6 anzeigen. Die beiden äußeren LED's können für die Stellungsanzeige verwendet werden, während die mittlere LED zur Anzeige des Betriebszustandes des Steuermoduls 6 dienen kann.

Mit 6.6 und 6.7 sind Klemmen auf gegenüberliegenden Seiten des Steuermoduls 6 bezeichnet, an denen unter anderem der Durchflusszähler 5, dessen Stromversorgung, die Anschlüsse an die Solenoidventile a, b des Umschaltventils 7 und dergleichen angeschlossen werden können.

Dieses Steuermodul 6 mit dem Programm zum Ausführen des Lernzyklus kann für verschiedene große Armaturen und verschiedene Schluckvolumen von Armaturen eingesetzt werden, ohne dass an dem Steuermodul 6 eine Anpassung an eine bestimmte Armatur oder an eine bestimmte Auslegung der Hydraulikleitungen vorgenommen werden müsste.

Auch können bestehende Anlagen mit einem solchen Steuermodul 6 für die Stellungsanzeige ausgestattet werden.

Es sind verschiedene Abwandlungen und Modifikationen des beschriebenen Verfahrens möglich. Z.B. kann während des Schrittes C9, in dem das Rücklaufvolumen bzw. das Schluckvolumen in einer Zwischenstellung der Armatur durch Zählen der auftretenden Impulse ermittelt wird, bei z.B. 10 % des Stellweges nochmals der Kolben 1.21 im Stellzylinder 1.2 angehalten werden, um das Kompressionsvolumen in der als Vorlaufleitung und als Rücklaufleitung geschalteten Hydraulikleitung zu ermitteln. Dies kann für eine Fehlerkorrektur vorgesehen werden.

Nachdem das im Steuermodul 6 vorhandene Programm nicht nur alle Parameter der Armatureneinheit 1 und der Steueranlage erfasst, sondern auch durch die ermittelten Zählwerte das Schluckvolumen des Stellzylinders 1.2 und Kompressionsvolumen in den verschiedenen Schaltzuständen kennt, können diese Daten bzw Impulszahlen in verschiedener Art und Weise ausgewertet werden, wobei der Lernzyklus in Fig. 3 ein bevorzugtes Beispiel darstellt.

Das beschriebene Verfahren und die beschriebene Vorrichtung können nicht nur bei Tankschiffen, sondern auch bei Industrieanlagen wie beispielsweise Raffinerien und dergleichen eingesetzt werden, bei denen von einer entfernt liegenden Steuerstelle aus verschiedene Armaturen an Rohrleitungen betätigt bzw. gesteuert werden müssen.

Die Erfindung ist somit vielfältig einsetzbar, um Kompressionseinflüsse bei der Stellungsanzeige einer hydraulisch betätigten Armatur auszuschalten.

## Patentansprüche

1. Verfahren zum Anzeigen der Stellung einer hydraulisch betätigten Armatur mit einem Stellzylinder (1.2) zum Betätigen der Armatur (1.1), der über zwei Hydraulikleitungen (2, 3) mit einem Umschaltventil (7) verbunden ist, durch das die Hydraulikleitungen zwischen druckführendem Vorlauf und drucklosem Rücklauf umgeschaltet werden können,
wobei die Strömung des durch eine der Hydraulikleitungen strömenden Hydraulikfluids in eine Anzahl von elektrischen Impulsen umgewandelt wird, von denen jeder einer vorgegebenen Volumeneinheit des Hydraulikfluids entspricht,
das Umschaltventil (7) an Versorgungsleitungen (P, T) angeschlossen ist, an denen weitere Umschaltventile (7) zum Betätigen weiterer Armaturen (1.n) angeschlossen sind, und
die Umschaltventile (7) über eine Abzweigleitung (T1) an die für alle Armaturen (1.1 bis 1.n) gemeinsame Rücklaufleitung (T) angeschlossen sind, **dadurch gekennzeichnet,**
**dass** an jedem Umschaltventil (7) in der Abzweigleitung (T1) zur Rücklaufleitung (T) ein Vorspanndruck aufrechterhalten wird, der höher ist als der Druck in der gemeinsamen Rücklaufleitung (T).

2. Verfahren nach Anspruch 1, wobei durch eine an die beiden Versorgungsleitungen (P, T) angeschlossene hydraulische Einrichtung (8) der Vorspanndruck in einem mit den Abzweigleitungen (T1) verbundenen Leitungsabschnitt (Tv) aufrechterhalten wird, an den alle Umschaltventile (7) angeschlossen werden.

3. Verfahren nach Anspruch 1 oder 2, wobei ein Vorspanndruck in der Größenordnung von ca. 3 bis 5 bar an den Umschaltventilen (7) aufrechterhalten wird.

4. Vorrichtung zum Anzeigen der Stellung von mehreren hydraulisch betätigten Armaturen (1.1 bis 1.n), die Stellzylinder (1.2) zum Betätigen der jeweiligen Armatur, Hydraulikleitungen (2,3), Versorgungsleitungen (P,T) und Umschaltventile (7) aufweist, wobei jeder Stellzylinder (1.2) durch zwei Hydraulikleitungen (2, 3) mit einem Umschaltventil (7) verbunden ist, durch das die Hydraulikleitungen zwischen druckführendem Vorlauf und drucklosem Rücklauf umgeschaltet werden können, wobei ein Druckmittelsensor (5) in einer der beiden Hydraulikleitungen vorgesehen ist, der die Strömung des durch die Hydraulikleitung strömenden Hydraulikfluids in eine Anzahl von elektrischen Impulsen umwandelt, von denen jeder einer vorgegebenen Volumeneinheit des Hydraulikfluids entspricht,
wobei die Umschaltventile (7) an die Versorgungsleitungen (P,T) angeschlossen sind, wobei die Umschaltventile (7) über eine Abzweigleitung (T1) an die für alle Armaturen (1.1 bis 1.n) gemeinsame Rücklaufleitung (T) angeschlossen sind, **dadurch gekennzeichnet, dass** eine hydraulische Einrichtung (8) an die Versorgungsleitungen (P, T) angeschlossen ist, wobei die hydraulische Einrichtung (8) einen Vorspanndruck gegenüber dem Druck in der gemeinsamen Rücklaufleitung (T) in einem Leitungsabschnitt (Tv) aufrechterhält, an den alle Umschaltventile (7) über die jeweiligen Abzweigleitungen (T1) angeschlossen sind.

5. Vorrichtung nach Anspruch 4, wobei die hydraulische Einrichtung (8) ein Druckbegrenzungsventil (8.1) und Rückschlagventile (8.2, 8.3) zwischen Druckbegrenzungsventil und Versorgungsleitungen (P, T) aufweist.

## Claims

1. Method for indicating the position of a hydraulically actuated armature, having a cylinder (1.2) for actuating the armature (1.1) which is connected by means of two hydraulic lines (2, 3) to a switch valve (7) through which the hydraulic lines can be switched between pressure-conducting feed flow and pressureless return flow, wherein the flow of the hydraulic fluid flowing through one of the hydraulic lines is converted into a number of electric pulses, each of which pulses corresponds to a pre-determined unit of volume of the hydraulic fluid,
the switch valve (7) is connected to supply lines (P, T), to which further switch valves (7) are connected for actuating further armatures (1.n), and
the switch valves (7) are connected via a branch line (T1) to the return line (T) common to all armatures (1.1 to 1.n),
**characterised in that**
at each switch valve (7) in the branch line (T1) to the return line (T), a preload pressure is maintained which is higher than the pressure in the common return line (T).

2. Method according to claim 1, wherein by means of a hydraulic means (8) connected to the two supply lines (P, T), the preload pressure in a line portion (Tv) connected to the branch lines (T1) is maintained, to which all switch valves (7) are connected.

3. Method according to claim 1 or 2, wherein a preload pressure in the order of magnitude of approximately 3 to 5 bar is maintained at the switch valves (7).

4. Device for displaying the position of a plurality of hydraulically actuated armatures (1.1 to 1.n), which has cylinders (1.2) for actuating the respective armature, hydraulic lines (2, 3), supply lines (P, T) and switch valves (7), wherein each cylinder (1.2) is connected by means of two hydraulic lines (2, 3) to a switch valve (7) through which the hydraulic lines can be switched between pressure-conducting feed flow and pressureless return flow,
wherein a pressure medium sensor (5) is provided in one of the two hydraulic lines, which converts the flow of the hydraulic fluid flowing through the hydraulic line into a number of electric pulses, each of which corresponds to a pre-determined unit of volume of the hydraulic fluid,
wherein the switch valves (7) are connected to the supply lines (P, T), wherein the switch valves (7) are connected by means of a branch line (T1) to the return line (T) common to all armatures (1.1 to 1.n),
**characterised in that**
a hydraulic means (8) is connected to the supply lines (P, T), wherein the hydraulic means (8) maintains a preload pressure in relation to the pressure in the common return line (T) in a line portion (Tv) to which all switch valves (7) are connected by means of the respective branch lines (T1).

5. Device according to claim 4, wherein the hydraulic means (8) has a pressure limiting valve (8.1) and return valves (8.2, 8.3) between pressure limiting valve and supply lines (P, T).

## Revendications

1. Procédé permettant d'indiquer la position d'accessoires de robinetterie à commande hydraulique avec un cylindre de réglage (1.2) pour la commande des accessoires de robinetterie (1.1) qui sont raccordés par le biais de deux conduites hydrauliques (2, 3) à une soupape de commutation (7), par laquelle les conduites hydrauliques peuvent être commutées entre la conduite montante acheminant la pression et la conduite descendante sans pression,
dans lequel l'écoulement du fluide hydraulique s'écoulant par une des conduites hydrauliques est converti en un nombre d'impulsions électriques, dont chacune correspond à une unité de volume prescrite du fluide hydraulique,
la soupape de commutation (7) est raccordée aux conduites d'alimentation (P, T), auxquelles d'autres soupapes de commutation (7) sont raccordées pour la commande d'autres accessoires de robinetterie (1.n), et
les soupapes de commutation (7) sont raccordées par le biais d'une conduite de dérivation (T1) à la conduite descendante (T) commune à tous les accessoires de robinetterie (1.1 à 1.n),
**caractérisé en ce**
**que** sur chaque soupape de commutation (7) dans la conduite de dérivation (T1) vers la conduite descendante (T) une pression de précontrainte est maintenue, laquelle est supérieure à la pression dans la conduite descendante (T) commune.

2. Procédé selon la revendication 1, dans lequel la pression de précontrainte est maintenue dans une section de conduite (Tv) reliée aux conduites de dérivation (T1) par un dispositif hydraulique (8) raccordé aux deux conduites d'alimentation (P, T), à laquelle sont raccordées toutes les soupapes de commutation (7).

3. Procédé selon la revendication 1 ou 2, dans lequel une pression de précontrainte est maintenue dans l'ordre de grandeur d'environ 3 à 5 bars sur les soupapes de commutation (7).

4. Dispositif permettant d'indiquer la position de plusieurs accessoires de robinetterie (1.1 à 1.n) à commande hydraulique qui présente des cylindres de réglage (1.2) pour la commande des accessoires de robinetterie respectifs, des conduites hydrauliques (2, 3), des conduites d'alimentation (P, T) et des soupapes de commutation (7), dans lequel chaque cylindre de réglage (1.2) est raccordé par deux conduites hydrauliques (2, 3) avec une soupape de commutation (7), par laquelle les conduites hydrauliques peuvent être commutées entre la conduite montante acheminant la pression et la conduite descendante sans pression, dans lequel un capteur de moyen de pression (5) est prévu dans une des deux conduites hydrauliques qui convertit l'écoulement du fluide hydraulique s'écoulant par la conduite hydraulique en un nombre d'impulsions électriques, dont chacune correspond à une unité de volume prescrite du fluide hydraulique,
dans lequel les soupapes de commutation (7) sont raccordées aux conduites d'alimentation (P, T), dans lequel les soupapes de commutation (7) sont raccordées par le biais d'une conduite de dérivation (T1) à la conduite descendante (T) commune à tous les accessoires de robinetterie (1.1 à 1.n), **caractérisé en ce qu'**un dispositif hydraulique (8) est raccordé aux conduites d'alimentation (P, T), dans lequel le dispositif hydraulique (8) maintient une pression de précontrainte par rapport à la pression dans la conduite descendante (T) commune dans une section de conduite (Tv), à laquelle toutes les soupapes de commutation (7) sont raccordées par le biais des conduites de dérivation (T1) respectives.

5. Dispositif selon la revendication 4, dans lequel le dispositif hydraulique (8) présente une soupape de limitation de pression (8.1) et des clapets antiretour (8.2, 8.3) entre la soupape de limitation de pression et les conduites d'alimentation (P, T).
